# EUROPEAN PATENT SPECIFICATION

(11) **EP 0 310 237 B1**
(45) Date of publication and mention of the grant of the patent: **16.03.1994**
(21) Application number: 88307770.3
(22) Date of filing: 22.08.1988
(51) Int. Cl.: H04B 3/14, H04L 25/04

(54) **Line build out circuits**
Leitungsanpassungsschaltungen
Circuits d'adaptation de ligne

(30) Priority: 01.10.1987 US 103858
(43) Date of publication of application: 05.04.1989
(73) Proprietor: INTERNATIONAL CONTROL AUTOMATION FINANCE S.A., Ville de Luxembourg (LU)
(72) Inventor: Molnar, Ramon J., Willoughby Hills Ohio 44094 (US); Poirer, Denis, Cleveland Heights Ohio 44121 (US)
(74) Representative: Cotter, Ivan John

(56) References cited:
- GB-A- 1 137 250
- GB-A- 2 184 329
- US-A- 3 568 100
- US-A- 3 671 886
- US-A- 3 904 992
- PATENT ABSTRACTS OF JAPAN vol. 10, no. 27 (E-378)(2084) 04 February 1986 & JP-A-60 185413

## Description

This invention relates to line build out circuits for equalising signals (e.g. digital data signals) from plural cables having different lengths.

In a digital communications system, digital data is sent and received along several cables of varying lengths. The digital data becomes much weaker and more distorted when travelling through a long cable path as opposed to a short one. For example, data is weaker and more distorted when travelling along a 2 kilometre cable length than along a 1 metre cable length.

Data sent through long cable lengths must be amplified and equialised to try to reconstruct the "clean" data pulses originally transmitted. Data signal pulses that go through the shortest cables require almost no amplification or equalisation. Amplification involves increasing the height of the signal's waveform peak. Equalisation involves undistorting the shape of the signal's waveform so that it looks like the signal that was first transmitted through the cable. This is done by increasing the amplitude of the signal wave in proportion to attenuation, or drop in wave amplitude, caused by the length of the communications cable.

Because signals travelling through several different lengths of cables are often transmitted to a single receiver, the degree of attenuation of the signals at the receiver is also varied. Rather than have a separate receiver for each length of cable to receive each differently attenuated signal, the state of the art is to provide some type of circuitry before the receiver to make each signal conform to standard characteristics.

The receiver must be able to accommodate the most attenuated signals from the longest length of cable. Therefore, the standard characteristics that signal waves must conform to before being inputted to the receiver are those resulting from their travelling through the longest cable length in the communication system.

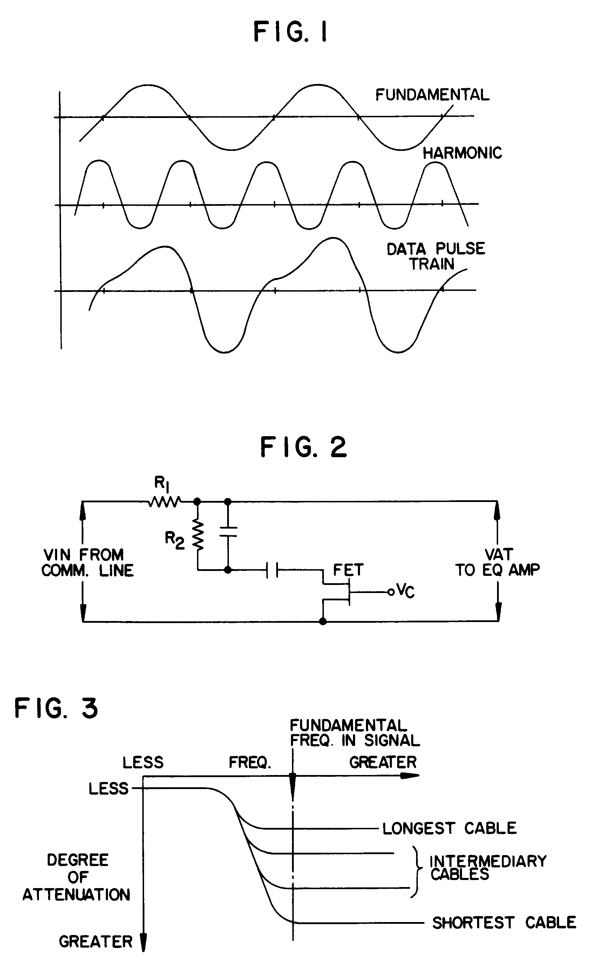

Each data pulse train making up a communication signal is actually composed of two or more pulse trains of varying frequency. The lowest frequency pulse train is called the fundamental. The higher frequency pulse trains are whole number multiples of the fundamental and are called harmonics. Figure 1 of the accompanying drawings shows a fundamental and a harmonic that combine to form a data pulse train.

When a communication signal travels through a long cable, the higher frequency harmonics are attenuated more than the lower ones, thereby distorting the overall signal. These upper harmonics must be amplified more than the lower ones on the receiving end of the cable in order to reconstruct the signal that was originally transmitted. For this reason, a second block of a receiver, called an equalisation amplifier, performs this function in known communication systems.

Equalistion amplifiers are not necessarily variable, meaning that they may not necessarily be able to adjust themselves to a varying degree of attenuation for every signal which travels through a different length of cable. For simplicity, equalisation amplifiers are set up to handle the worse case of attenuation or the signals from the longest length of cable. The signals from the smaller lengths must then be distorted to the degree of the longest cable in order to be inputted to the single equalisation amplifier. If this did not happen, the equalisation amplifier would over-amplify the signals from the shorter cable lengths, thereby distorting these clearer signals. What actually happens then is that the clearer signals from the shorter cables must actually be attenuated or degraded before they are inputted to the equalisation amplifier or receiver.

Therefore, known communications systems comprise circuits which are designed to attenuate the signals from different cable lengths to conform to the degree of attenuation seen in a signal from the longest cable length. These circuits are called Automatic Line Build Out (ALBO) circuits.

Previously proposed ALBO circuits use voltage gain techniques to provide the attenuation needed by the stronger signals from the shorter cable lengths. These ALBO circuits use devices such as field effect transistors (FETs) to attenuate the amplitude of the incoming signal wave. Such an ALBO circuit, which comprises resistors R1 and R2, capacitors and an FET, connected as shown, is illustrated in Figure 2 of the accompanying drawings. As shown in Figure 2, a signal Vc corresponding in proportion to the cable length and generated by a controlling device (not shown) is inputted to the FET as shown. The signal Vc adjusts the resistance of the FET to decrease by a certain degree the amplitude of a signal wave VIN from a communication line, the degree corresponding to the cable length. The resultant output signal VAT is then applied to equalisation amplifiers (EQ AMP). This will make all cable lengths attenuate to the degree of signals from the longest cable length: see Figure 3 of the accompanying drawings.

A problem with the previously proposed ALBO circuits is that they only adjust signals in terms of amplitude or output voltage and do not take account of distortions in the signal's shape or frequency response. In other words, the previously proposed ALBO circuits do not provide for varying degrees of attenuation of the fundamental and the different harmonics that make up a signal wave. Also, the previous ALBO circuits do not compensate for the loss of bandwidth in longer cables. These deficiencies prevent the use of the correct amount of distortion at very long cable lengths before outputting the signal to an equalisation amplifier.

US 3 904 992 discloses a two-part network for repeatered transmission line equalisation. The network includes a single one-port uniformly distributed RC network that serves to provide frequency dependent attenuation.

According to a first aspect of the invention there is provided a line build out circuit as set forth in claim 1.

The tuning component may be a tuning diode or a varactor having a capacitance which varies according to the control voltage. The tuning component and resistor together act as a resistive-capactive (RC) tuning circuit. The signal measured at the cathode of the tuning component has a frequency roll-off which represents the degree of attenuation that depends on the frequency of the signal being inputted over the resistor to the cathode.

Preferred enhanced automatic line build out (EALBO) circuits embodying the invention and described below at least partially solve the above-mentioned problems by making signals from all cable lengths look like the longest cable as regards both attenuation and frequency response. In other words, the enhanced ALBO (EALBO) circuits attenuate the fundamental and harmonic components of a signal wave in the varying degrees at least approximating to those that a signal travelling over the longest cable would be attenuated.

The preferred EALBO circuits are simple in design, rugged in construction and economical to manufacture.

The invention will now be further described, by way of illustrative and non-limiting example, with reference to the accompanying drawings, in which like reference signs designate like or corresponding parts throughout, and in which:
Figure 1 is a graph representing a data pulse train and fundamental and harmonic components thereof that can be conveyed along cables of various lengths;
Figure 2 is a schematic circuit diagram of a previously proposed automatic line build out circuit;
Figure 3 is a graph plotting degree of attenuation against frequency for the circuit of Figure 2;
Figure 4 is a block diagram of a circuit for equalising signals from a plurality of cables having different lengths and utilising an enhanced automatic line build out circuit (EALBO) embodying the invention;
Figure 5 is a schematic diagram showing an EALBO circuit according to one embodiment of the invention;
Figure 6 is a view, similar to Figure 5, of another embodiment of the invention;
Figure 7 is a graph plotting capacitance against control voltage of a tuning device that can be used in embodiments of the invention;
Figure 8 is a graph plotting attenuation against frequency for signals received along cables having different lengths when an EALBO circuit embodying the invention is employed;
Figure 9 is a graph plotting attenuation against frequency for signals received over cables of different lengths when a previously proposed ALBO circuit is employed;
Figure 10 is a graphic representation of signal processing effected by a EALBO circuit embodying the invention for equalising signals received over a plurality of cables having different lengths; and
Figure 11 is a graphic representation similar to Figure 10 showing the completion of signal processing for producing stable, equalised signals.

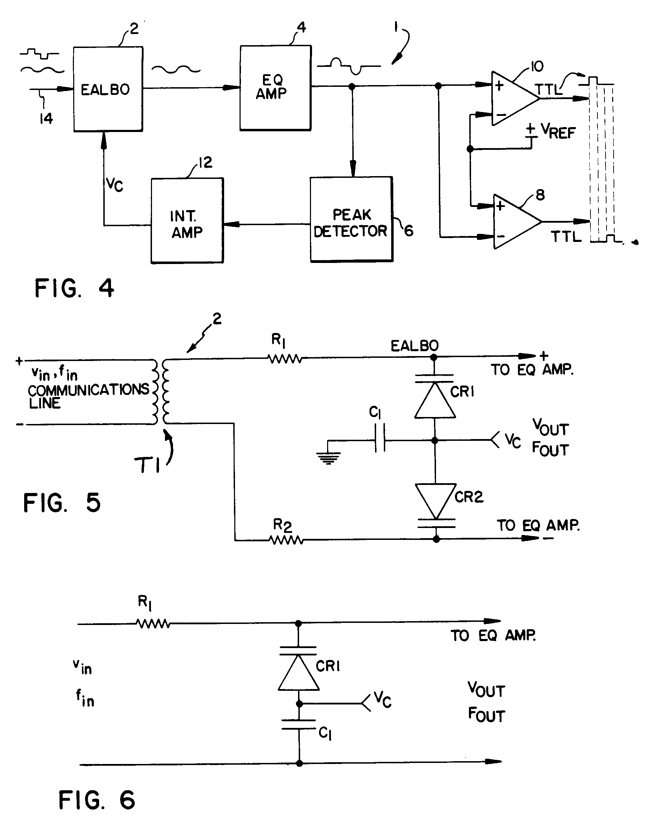

An enhanced automatic line build out (EALBO) circuit embodying the invention, for equalising signals received over cables having various lengths, will now be described with reference to Figures 4 to 6.

Figure 4 shows an overall receiver circuit 1 for communications signals. The receiver circuit 1 includes an EALBO circuit 2 embodying the invention connected to an equalisation amplifier (EQ AMP) 4. An output of the EQ AMP 4 is connected to a peak detector 6, to a negative input of a first comparator 8, and to a positive input of a second comparator 10. An output of the peak detector 6 is connected to an integration amplifier 12. An output of the integration amplifier 12 is connected back to the EALBO circuit 2. A positive DC voltage VREF is connected to a negative input of the second comparator 10 and to a positive input of the first comparator 8. All of the components 4 to 12 are known in the art.

In operation, the EALBO circuit 2 receives a data (communication) signal along a line 14. This signal is made up of a series of positive and negative pulses. The EALBO circuit 2 adds the required fundamental and harmonic attenuation to this signal so that it looks like it was received from the longest cable in the system no matter what the actual length of the cable was. The equalisation amplifier 4 receives the attenuated signal from the EALBO circuit 2 and boosts the fundamental and the harmonics as required by a signal received from the longest cable in the system, attempting to restore the data signal back to its transmitted shape.

A feedback signal must be sent to the EALBO circuit 2 in order to set the degree of attenuation needed by a particular signal. This is accomplished by detecting the initial peak voltage signal at the peak detector 6 from the output of the EQ AMP 4. The peak detector 6 is a known combination of diodes and a capacitor which charges in relation to the positive and negative peaks of the signal. This peak voltage signal is fed by the peak detector 6 to the integration amplifier 12. The integration amplifier 12 compares the peak voltage values with constant reference values to arrive at a difference value. This difference value is then integrated, which smooths the signal to create a DC control voltage Vc which is then sent to the EALBO. The voltage Vc is indicative of the length of cable travelled by the present signal.

The signal from the EQ AMP 4 is also inputted to the first and second comparators 8 and 10. The comparators convert the signal from the EQ AMP 4 into standard TTL 0 to +5v square waves. This data is then sent to controlling microprocessors of a process control system (not shown).

One embodiment of the EALBO circuit 2 is shown in Figure 5. It comprises a transformer T1 having a primary winding connected across a positive line and negative line which comprise a communications line or cable. One terminal of a secondary winding of the transformer T1 is connected to a fixed resistor R1 and another terminal of the secondary winding is connected to a fixed resistor R2. The resistor R1 is connected to the cathode of a tuning diode CR1 and the resistor R2 is connected to the cathode of a tuning diode CR2. The anodes of the diodes CR1 and CR2 are connected to an input terminal of a capacitor C1 and to the control voltage Vc. The output terminal of the capacitor C1 is connected to earth (ground). The cathodes of the diodes CR1 and CR2 are connected to two output lines connected to the EQ AMP 4.

In operation, the transformer T1 isolates the rest of the EALBO circuit 2 from common mode noise. Common mode noise is a series of glitches in a signal caused by large motors, transformers, or power lines that are close to a signal transmission line. Common mode noise rejection is a specification of a circuit which defines its ability to reject input noise at its output. The units used when describing common mode noise rejection are decibels. The transformer T1 increases the common mode noise rejection of the circuit shown in Figure 5, providing isolation from common mode noise seen on the communications line. This is accomplished because the voltage seen across the secondary winding of the transformer is the difference in voltage at any one time between the positive and negative lines of the transmission cable or line. Common mode noise would be seen across both positive and negative transmission lines. Therefore, the voltage difference seen on the secondary winding will remain the same even if noise appears on the transmission lines.

The transformer T1 is not necessary to the operation of the EALBO circuit 2, although it aids in operation by cancelling out noise. When not using the transformer T1, as in Figure 5, the EALBO circuit may be single ended as shown in Figure 6. This is the simplest configuration since only one tuning diode (CR1) is used. The tuning diode CR1 may be a varactor. Such tuning diodes and varactors are known in the art. Commercially available tuning diodes are the MV1403H to MV1405H diodes available from Motorola. Published characteristics are available for these and for a variety of tuning varactors. The remaining components making up the circuit shown in Figure 6 are the same as in Figure 5.

The operation of the circuits of Figure 5 and Figure 6 is essentially the same, except that in Figure 5 there are actually twin EALBO circuits operating and the output to the EQ AMP 4 actually is the voltage difference between the upper EALBO circuit and the lower EALBO circuit. In Figure 6, there is one EALBO circuit operating and the output to the EQ AMP 4 is the voltage difference between the EALBO'S output and the earth (ground) reference. Neither case is more advantageous than the other, except that Figure 5 facilitates the use of a transformer to improve noise reduction.

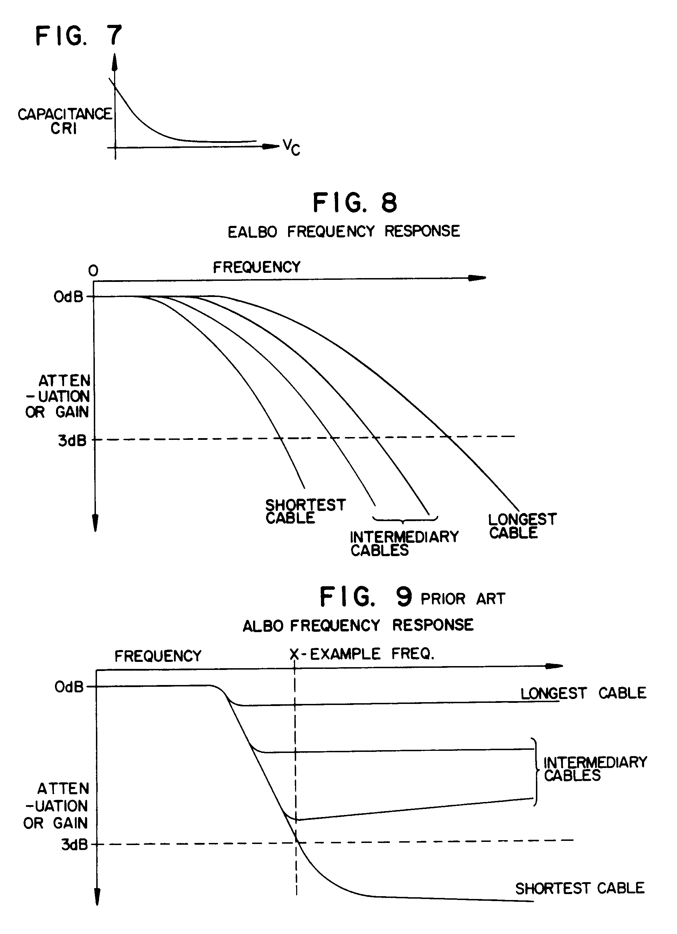

Figure 6 will be used to describe the actual operation of the EALBO circuit 2. The voltage Vc from the integration amplifier 12 is inputted to the anode of the diode CR1 and to the capacitor C1. The reason for providing the capacitor C1 is to supply an AC ground for the anode of the diode CR1. When the voltage Vc is applied to the anode of the diode CR1, the capacitance of the diode CR1 varies according thereto. As the voltage Vc approaches zero volts DC, the capacitance of the diode CR1 becomes greater (see Figure 7). The combination of the diode CR1 and the reactor R1 acts as a resistive-capacitance (RC) timing circuit and, as the capacitance of the diode CR1 increases, the frequency roll-off of the timing circuit increases. Frequency roll-off is the degree of attenuation dependent upon the frequency of the signal. Increased frequency roll-off means that attenuation is increased for a given frequency.

For signals which travel through shorter lengths of cable, the voltage Vc inputted to the EALBO circuit 2 is close to zero. This increases the capacitance of the diode CR1, thereby increasing the frequency roll-off of these stronger signals until they reach the frequency roll-off point of a signal seen through the longest wire. For signals travelling through longer wires, the voltage Vc inputted to the EALBO circuit 2 is relatively large. This decreases the capacitance of the diode CR1, thereby decreasing the frequency roll-off of the timing circuit. This lower frequency roll-off is needed for signals travelling in the longer cables because the major portion of the frequency roll-off seen by a signal travelling through the longest cable is already provided by the longer cable.

The feedback through the peak detector 6 and integration amplifier 12 adjusts the voltage Vc to provide a varying signal dependent upon the length of cable the signal was received from. This, in turn, adjusts the frequency roll-off needed for each signal. By tailoring the degree of frequency roll-off needed to be applied to each received signal, the attenuation of the harmonic and fundamental frequencies that make up the signal can be applied in differing degrees as required. This is needed in order to make each signal completely duplicate the characteristics of a signal travelling through the longest cable in the system. Once this duplication is achieved, the signal can be fully reproduced by the equalisation amplifier 4, which is designed to amplify signals from the longest cable in the system. Figure 8 shows the frequency roll-off curves for a typical EALBO circuit 2.

From Figure 8, it is seen that, for the shortest cable, the EALBO circuit has the greatest attenuation per frequency, or frequency roll-off, and for the longest cable, the EALBO circuit has the least attenuation per frequency. The main idea is that the longer the cable the greater the bandwidth or 3db point, whereas the shorter the cable the smaller the bandwidth or 3db point. This is also illustrated in Figure 8. Having separate frequency roll-off curves for each length of cable, allowed the harmonic and fundamental components of a signal to be attenuated at different levels, is required because they travel at varying frequency.

The value of the resistor R1 is determined by the minimum allowed control voltage at the anode of the tuning diode to get the maximum value capacitance from the tuning diode or varactor. The dynamic range of the EALBO circuit 2 is only limited by the capacitance range of the tuning diode.

The problem concerning a lack of frequency sensitivity of previously proposed ALBOs is solved by the above-described embodiments of the invention. By providing a separate frequency response or frequency roll-off for each size of cable that a communications signal may travel through, the harmonic and fundamental components of a signal are adjusted in varying degrees. The previously proposed ALBO circuits cannot do this, especially at higher frequencies (see Figure 9). As can be seen from Figure 9, the previously proposed ALBO circuits have no frequency roll-off beyond a certain frequency for any given length of cable. Thus, the harmonic and fundamental components of a communications signal travelling at different frequencies are attenuated to the same degree. However, in actuality, different degrees of attenuation are needed for the harmonic and fundamental components in order to fully create a signal as seen through the longest cable in the system. The above-described embodiments of the invention provide these different degrees of attenuation.

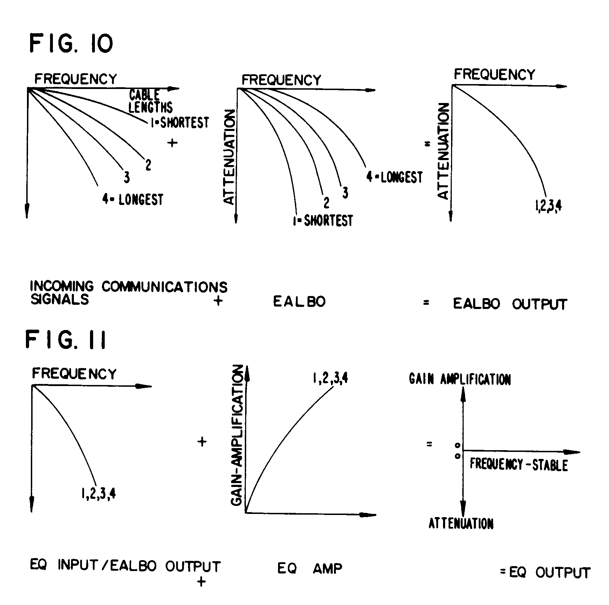

By correcting this problem associated with the previous proposals, the embodiments of the invention allow longer cables to be used in the communications system and allows the signals to travel at higher frequencies for a given length of cable. The previously proposed ALBO circuits did not provide variable frequency roll-offs depending upon the length of cable the signal was travelling through. Thus, an equalisation amplifier could not be designed to operate with too long a maximum cable length because the previously proposed ALBO circuits would not attenuate the smaller cable accurately enough to arrive at a correct reproduction of the signal. In other words, the difference in bandwidths between the longest and shortest cable lengths could not be too great because of the limitations of equalisation amplifiers if a previously proposed ALBO circuit were used. If an EALBO circuit embodying the invention is used, the limitations of the equalisation amplifier is not a factor because the EALBO circuit can adjust the bandwidth of the varying lengths to conform to the equalisation amplifier's optimum attenuation specifications. The EALBO circuit provides this accurate attenuation by providing the variable frequency roll-off. The resultant waveforms produced by the equalisation amplifier in conjunction with the EALBO circuit are shown in Figure 10.

The dynamic range of the EALBO circuit could be increased by cascading multiple stages together, or by using a wider capacitance tuning diode or varactor. Another method of implementing the EALBO circuit would be to use a variable resistor with a fixed capacitor. To handle a system that uses several frequencies, both a variable resistor and tuning diode or varactor could be used. To handle several frequencies though, the equalisation amplifier could no longer be fixed and would require some dynamic frequency response using either a variable resistor or tuning varactor.

## Claims

1. A receiver circuit for receiving a plurality of signals from a plurality of cables of different lengths comprising:
(i) a line build out circuit for equalising the signals, the line build out circuit having:
a tuning component (CR1) having a variable characteristic, an anode and a cathode, a control voltage (Vc) indicative of the length of a cable to be travelled by a signal to be equalised being applied to the anode for varying the variable characteristic;
a capacitor (C1) connected to the anode; and
a resistor (R1) connected to the cathode;
the signal to be equalised being applied via the resistor (R1) to the cathode and being measured at the cathode, the signal having a frequency roll-off representing a degree of attenuation which depends upon the frequency of the signal and upon the length of the cable over which the signal was supplied;
(ii) an equalising amplifier (4) connected to the cathode of the tuning component (CR1) for amplifying the signal;
(iii) a peak detector (6) connected to an output of the equalising amplifier (4) for measuring a voltage peak of the signal amplified by the equalising amplifier;
(iv) and an integrating amplifier (12) connected between the peak detector (6) and the anode of the tuning component (CR1) for generating said control voltage, the peak detector (6) and integrating amplifier (12) generating the control voltage.

2. A receiver circuit according to claim 1, wherein the tuning component (CR1) comprises a tuning diode, said variable characteristic comprising capacitance of the tuning diode.

3. A receiver circuit according to claim 1, wherein the tuning component (CR1) comprises a tuning varactor, said variable characteristic comprising capacitance of the tuning varactor.

4. A receiver circuit according to claim 1, claim 2 or claim 3, including a reference line connected to the capacitor (C1) on an opposite side thereof from the anode of the tuning component, the signal being measured between the cathode and the reference line.

5. A receiver circuit according to claim 1, claim 2 or claim 3, including a second tuning component (CR2) having a second anode connected to the first-mentioned anode, and a second cathode, and a second resistor (R2) connected to the second cathode, the capacitor (C1) being connected on one side to the first-mentioned and second anodes and on an opposite side to a reference earth, the control voltage means being connected to the first-mentioned and second anodes, and the signal being measured between the first-mentioned and second cathodes.

6. A receiver circuit according to claim 5, including a transformer (T1) having a primary winding connected to the cable for carrying a signal and a secondary winding connected between the first-mentioned and second resistors (R1, R2).

7. A receiver circuit according to claim 1, including first and second comparators (8, 10) each having positive and negative inputs, the output of the equalising amplifier (4) being connected to the negative input of the first comparator (8) and to the positive input of the second comparator (10), and a reference voltage (VREF) being connected to the negative input of the second comparator (10) and to the positive input of the first comparator (8), the first and second comparators (8, 10) each having an output at which square waves are formed, corresponding to the signal processed through the equalising amplifier (4).

## Patentansprüche

1. Empfängerschaltkreis für den Empfang einer Mehrzahl von Signalen aus einer Mehrzahl von Kabeln unterschiedlicher Länge, mit:
(i) einem Leitungsausgleichsschaltkreis für das Ausgleichen bzw. Gleichschalten der Signale, wobei der Leitungsausgleichsschaltkreis hat:
ein Abstimmbauteil (CR1) mit variabler Charakteristik, eine Anode und eine Kathode, eine Steuerspannung (Vc), welche die Länge eines Kabels anzeigt, das von einem gleichzuschaltenden Signal durchlaufen werden muß und welche an die Anode angelegt wird, um die variable Charakteristik zu verändern,
einen Kondensator (C1), der mit der Anode verbunden ist, und
einen Widerstand (R1), der mit der Kathode verbunden ist,
wobei das gleichzuschaltende Signal über den Widerstand (R1) an die Kathode angelegt und an der Kathode gemessen wird, wobei das Signal eine Frequenzdämpfung hat, welche das Maß der Abschwächung wiedergibt, die von der Frequenz des Signales und von der Länge des Kabels abhängig ist, über weiches das Signal zugeführt wurde,
(ii) einem Ausgleichsverstärker (4), der mit der Kathode des Abstimmbauteiles (CR1) für das Verstärken des Signales angeschlossen ist,
(iii) einem Spitzendetektor (6), der an einen Ausgang des Ausgleichsverstärkers (4) angeschlossen ist, um eine Spannungsspitze des von dem Ausgleichsverstärker verstärkten Signales zu messen,
(iv) und mit einem integrierenden Verstärker (12), der zwischen den Spitzendetektor (6) und die Anode des Abstimmbauteiles (CR1) geschaltet ist, um die Steuerspannung zu erzeugen, wobei der Spitzendetektor (6) und der integrierende Verstärker (12) die Steuerspannung erzeugen.

2. Empfängerschaltkreis nach Anspruch 1, wobei das Abstimmbauteil (CR1) eine Abstimmdiode aufweist, wobei die variable Charakteristik die Kapazität der Abstimmdiode aufweist.

3. Empfängerschaltkreis nach Anspruch 1, wobei das Abstimmbauteil (CR1) einen Abstimmvaractor (Abstimm-Reaktanzdiode) aufweist, wobei die variable Charakteristik die Kapazität des Abstimmvaractors aufweist.

4. Empfängerschaltkreis nach Anspruch 1, 2 oder 3, einschließlich einer Bezugsleitung, die mit dem Kondensator (C1) an der der Anode des Abstimmbauteiles gegenüberliegenden Seite desselben angeschlossen ist, wobei das Signal zwischen der Kathode und der Bezugsleitung gemessen wird.

5. Empfängerschaltkreis nach Anspruch 1,2 oder 3, einschließlich eines zweiten Abstimmbauteiles (CR2), welches eine zweite Anode hat, die mit der zuerst erwähnten Anode verbunden ist, sowie eine zweite Kathode und einen zweiten Widerstand (R2), der mit der zweiten Kathode verbunden ist, wobei der Kondensator (C1) auf einer Seite mit der zuerst erwähnten und der zweiten Anode und auf der gegenüberliegenden Seite mit einem Bezugspunkt Masse verbunden ist, wobei die Steuerspannungseinrichtung mit der zuerst erwähnten und der zweiten Anode verbunden ist und das Signal zwischen der zuerst erwähnten und der zweiten Kathode gemessen wird.

6. Empfängerschaltkreis nach Anspruch 5, einschließlich eines Transformators (T1), der eine Primärwicklung hat, welche mit dem Kabel verbunden ist, um ein Signal zu tragen, und eine zweite Wicklung hat, welche zwischen den ersterwähnten und den zweiten Widerstand (R1, R2), geschaltet ist.

7. Empfängerschaltkreis nach Anspruch 1, einschließlich erster und zweiter Vergleicher (8, 10), die jeweils positive und negative Eingänge haben, wobei der Ausgang des Ausgleichsverstärkers (4) mit dem negativen Eingang des ersten Vergleichers (8) und dem positiven Eingang des zweiten Vergleichers (10) verbunden ist, und wobei eine Bezugsspannung (VREF) an den negativen Eingang des zweiten Vergleichers (10) und den positiven Eingang des ersten Vergleichers (8) angeschlossen ist, wobei die ersten und zweiten Vergleicher (8,10) jeweils einen Ausgang haben, in welchem Rechteckwellen gebildet werden, die dem durch den Ausgleichsverstärker (4) verarbeiteten Signal entsprechen.

## Revendications

1. Circuit récepteur pour recevoir une pluralité de signaux provenant d'une pluralité de câbles de longueurs différentes comprenant :
(i) un circuit de complément de longueur de ligne pour égaliser les signaux, le circuit de complément de longueur de ligne comportant :
un composant d'accord (CR1) ayant une caractéristique variable, une anode et une cathode, une tension de commande (Vc), indicatrice de la longueur d'un câble à parcourir par un signal à égaliser, étant appliquée à l'anode pour faire varier la caractéristique variable ;
un condensateur (C1) connecté à l'anode ; et,
une résistance (R1) connectée à la cathode ;
le signal à égaliser étant appliqué, par l'intermédiaire de la résistance (R1), à la cathode et état mesuré au droit de la cathode, le signal ayant un affaiblissement de fréquence représentant un degré d'atténuation qui dépend de la fréquence du signal et de la longueur du câble sur lequel le signal a été délivré ;
(ii) un amplificateur d'égalisation (4) connecté à la cathode du composant d'accord (CR1) pour amplifier le signal ;
(iii) un détecteur de pic (6) connecté à une sortie de l'amplificateur d'égalisation (4) pour mesurer un pic de tension du signal amplifié par l'amplificateur d'égalisation ;
(iv) et un amplificateur d'intégration (12) connecté entre le détecteur de pic (6) et l'anode du composant d'accord (CR1) pour produire ladite tension de commande, le détecteur de pic (6) et l'amplificateur d'intégration (12) produisant la tension de commande.

2. Circuit récepteur selon la revendication 1, dans lequel le composant d'accord (CR1) comprend une diode d'accord, ladite caractéristique variable comprenant la capacité de la diode d'accord.

3. Circuit récepteur selon la revendication 1, dans lequel le composant d'accord (CR1) comprend une diode varicap d'accord, ladite caractéristique variable comprenant la capacité de la diode varicap d'accord.

4. Circuit récepteur selon la revendication 1, la revendication 2 ou la revendication 3, comprenant une ligne de référence connectée à la capacité (C1) de son côté opposé par rapport à l'anode du composant d'accord, le signal étant mesuré entre la cathode et la ligne de référence.

5. Circuit récepteur selon la revendication 1, la revendication 2 ou la revendication 3, comprenant un second composant d'accord (CR2) ayant une seconde anode connectée à la première anode mentionnée, et une seconde cathode, et une seconde résistance (R2) connectée à la seconde cathode, le condensateur (C1) étant connecté d'un côté à la première anode mentionnée et à la seconde anode, et de l'autre côté à une masse de référence, le moyen de tension de commande étant connecté à la première anode mentionnée et à la seconde anode, et le signal étant mesuré entre la première cathode mentionnée et la seconde cathode.

6. Circuit récepteur selon la revendication 5, incluant un transformateur (T1) comportant un enroulement primaire, connecté au câble destiné à transporter un signal, et un enroulement secondaire entre la première résistance mentionnée et la seconde résistance (R1, R2).

7. Circuit récepteur selon la revendication 1, comprenant des premier et second comparateurs (8, 10) ayant chacun une entrée positive et une entrée négative, la sortie de l'amplificateur d'égalisation (4) étant connectée à l'entrée négative du premier comparateur (8) et à l'entrée positive du second comparateur (10), et une tension de référence (VREF) étant appliquée à l'entrée négative du second comparateur (10) et à l'entrée positive du premier comparateur (8), les premier et second comparateurs (8, 10) ayant chacun une sortie, à laquelle des ondes carrées sont formées, qui correspondent au signal traité dans l'amplificateur d'égalisation (4).
